# EUROPEAN PATENT APPLICATION

(11) **EP 4 834 520 A1**
(43) Date of publication of application: **04.11.2026**
(21) Application number: 24914821.4
(22) Date of filing: 13.08.2024
(51) Int. Cl.: B23K 37/00

(54) **BATTERY WELDING SYSTEM AND CONTROL METHOD**

(30) Priority: 02.01.2024 CN 202410009789
(71) Applicant: Contemporary Amperex Technology Co., Limited, Ningde, Fujian 352100 (CN)
(72) Inventor: SHI, Deqiang, Ningde, Fujian 352100 (CN); YE, Chunguang, Ningde, Fujian 352100 (CN); LAN, Bin, Ningde, Fujian 352100 (CN)
(74) Representative: Ziebig Hengelhaupt Intellectual Property Attorneys Patentanwaltskanzlei PartGmbB
(86) International application number: PCT/CN2024/111844
(87) International publication number: WO 2025/145599

(57) **Abstract**

A battery welding system and a control method The battery welding system comprises a first conveying module (200) and a first welding module (100). The first conveying module (200) is configured to convey an incoming battery. The incoming battery comprises a casing and a top cover, the extension direction of a long side of the incoming battery being parallel to the conveying direction of the first conveying module (200). The first welding module (100) is arranged beside the first conveying module (200) and is configured to weld the joint of a long side of the casing and a long side of the top cover. During a long side welding process, the incoming battery continuously moves under the conveying of the first conveying module (200), and the first welding module (100) remains fixed.

## Description

### CROSS-REFERENCE TO RELATED APPLICATIONS

The present application claims priority to Chinese patent application 202410009789.0 entitled "BATTERY WELDING SYSTEM AND CONTROL METHOD" and filed on January 2, 2024, which is incorporated herein by reference in its entirety.

### TECHNICAL FIELD

The present application relates to the field of batteries, and in particular, to a battery welding system and a control method.

### BACKGROUND

Power batteries feature high voltage, large capacity, low power consumption, no memory effect, environmental friendliness, compact size, low internal resistance, slight self-discharge, and long cycle life, making them the world's best-performing green batteries with comprehensive properties at present. During production of a power battery, a case and a top cover of the power battery are typically welded together. Therefore, how to improve the welding efficiency directly affects the production efficiency of power batteries.

### SUMMARY

In view of the above problems, the present application provides a battery welding system and a control method, so as to improve welding efficiency.

A first aspect of the present application provides a battery welding system, and the battery welding system includes a first conveying module and a first welding module. The first conveying module is configured to convey an incoming battery. The incoming battery includes a case and a top cover. An extension direction of a long side of the incoming battery is parallel to a conveying direction of the first conveying module. The first welding module is arranged beside the first conveying module and is configured to weld a joint between a long side of the case and a long side of the top cover. In a long side welding process, the incoming battery moves continuously under the conveying of the first conveying module, while the first welding module remains fixed. Based on this approach, while ensuring welding quality, the incoming battery may be kept in a continuous conveying state during the welding, thereby increasing a circulation speed, reducing control costs and production costs, simplifying production strategies, and ultimately improving production efficiency. Compared with related technologies where the battery remains stationary during welding and a welding machine is controlled to move relative to the battery for welding, this method eliminates a requirement for space reserved for the movement of the welding machine, so that the entire production environment is more spacious.

In some embodiments, the first conveying module is configured to reduce a conveying speed from an initial first speed to a second speed at least when the first welding module starts welding a first end of the long side of the incoming battery that arrives at the first welding module first, and to increase the conveying speed from the second speed to the first speed when welding of a second end of the long side of the incoming battery that arrives at the first welding module later is completed. Reducing the conveying speed may guarantee the welding quality.

In some embodiments, the battery welding system further includes a first rolling device, and the first rolling device is arranged beside the first conveying module and downstream of the first welding module in the conveying direction of the first conveying module, and is configured to roll a long-side welding seam after welding the long side of the incoming battery. Rolling the long-side welding seam may improve the strength and reliability of the welding seam, thereby ensuring production quality.

In some embodiments, the battery welding system further includes a second conveying module and a second welding module, the second welding module is arranged beside the second conveying module, and the second welding module is configured to weld a joint between a short side of the case and a short side of the top cover. The short side of the case and the short side of the top cover are matched in size, and the process of welding the short side of the case and the short side of the top cover together is referred to as a short side welding process. Welding is performed on both the long sides and the short sides, which improves the integrity of the welding of the incoming battery.

In some embodiments, the battery welding system includes a transfer device. The first conveying module and the second conveying module are arranged at an interval, the transfer device is arranged between the first conveying module and the second conveying module, and is configured to transfer the incoming battery to the second conveying module after the long side of the incoming battery is welded. By using the transfer device, the transfer of the incoming battery may be completed conveniently and efficiently.

In some embodiments, the first conveying module and the second conveying module are arranged in parallel at an interval, and the conveying direction of the first conveying module is opposite to a conveying direction of the second conveying module. This may effectively save space and improve space utilization.

In some embodiments, the transfer device includes a gripping assembly, and the gripping assembly is configured to grip the incoming battery and reverse the orientation of the incoming battery so that when the incoming battery is placed on the second conveying module, an extension direction of the short side of the incoming battery is parallel to the conveying direction of the second conveying module. During the transfer of the incoming battery by the transfer device, the gripping assembly also adjusts the orientation of the incoming battery, which improves the efficiency, so that when the incoming battery is placed on the second conveying module, no adjustment of the angle of the incoming battery is required, and the short side may be welded directly, thus improving the production efficiency.

In some embodiments, the gripping assembly is rotatably arranged about its own axis, so as to drive the incoming battery to rotate when gripping the incoming battery. Specifically, the transfer device has a rotary cylinder, and the gripping assembly is arranged on the rotary cylinder. The rotary cylinder drives the gripping assembly to rotate, so as to adjust the orientation of the incoming battery being gripped.

In some embodiments, the gripping assembly is configured to grip two incoming batteries. By grabbing two incoming batteries at once, adjusting orientations of the two incoming batteries at the same time, and placing the two incoming batteries on the second conveying module, the transfer efficiency may be improved, thereby increasing the production efficiency.

In some embodiments, the transfer device includes a central rotating shaft and a plurality of gripping assemblies connected to the central rotating shaft. The plurality of gripping assemblies are arranged centrosymmetrically around the central rotating shaft. The central rotating shaft is configured to drive the plurality of gripping assemblies to move circularly about the central rotating shaft, so that during one rotation of the central rotating shaft, the plurality of gripping assemblies sequentially grip incoming batteries on the first conveying module. Controlling the central rotating shaft to rotate continuously in one direction may continuously transfer the incoming batteries on the first conveying module to the second conveying module, which simplifies the transfer control strategy.

In some embodiments, the transfer device includes four gripping assemblies, with two adjacent gripping assemblies spaced apart by 90 degrees in a direction in which the gripping assemblies move circularly. This may simplify the transfer device, and during the rotation of the central rotating shaft, the four gripping assemblies grab incoming batteries in sequence, thus improving the efficiency.

In some embodiments, the transfer device further includes a lifting member, and the gripping assembly is arranged on the lifting member. The lifting member is movably arranged in a height direction to drive the gripping assembly to move in the height direction, thereby adjusting a distance between the gripping assembly and the second conveying module in the height direction. The height of the gripping assembly may be easily adjusted using the lifting member, thereby reducing control costs.

In some embodiments, the battery welding system further includes a second rolling device, and the second rolling device is arranged beside the second conveying module and downstream of the second welding module in the conveying direction of the second conveying module, and is configured to roll a short-side welding seam of the incoming battery. After the short side welding, rolling the short-side welding seam may improve the strength and reliability of the welding seam, thereby ensuring the production quality.

In some embodiments, the battery welding system further includes an unloading module, and the unloading module is arranged corresponding to the second conveying module, and is configured to unload the incoming battery after the short side of the incoming battery is welded. After the long side and the short side of the incoming battery are welded, it is unloaded through the unloading module, so as to facilitate subsequent production processing and improve the smoothness of the entire production process.

In some embodiments, the battery welding system further includes a press-fitting device, and the press-fitting device is arranged beside the first conveying module and upstream of the first welding module in the conveying direction of the first conveying module, and is configured to press-fit the incoming battery before welding the long side of the incoming battery. Performing press-fitting before welding the long side may improve the reliability of a finished battery.

In some embodiments, the first welding module includes two first laser welding machines, the two first laser welding machines are arranged at an interval, and the two first laser welding machines are configured to weld two long sides of the incoming battery, respectively. The two first laser welding machines are located on two sides of the incoming battery, respectively, which allows welding to be performed on both long sides, thus improving welding efficiency.

In some embodiments, the battery welding system further includes a loading module, and the loading module is arranged corresponding to the first conveying module, and is configured to load batteries to the first conveying module. The loading module may improve loading efficiency and increase the production speed.

A second aspect of the present application provides a control method based on the above battery welding system. The control method includes the following steps:
conveying, by a first conveying module, an incoming battery to a first welding module, where in the conveying process of the incoming battery, an extension direction of a long side of the incoming battery is parallel to a conveying direction of the first conveying module; and when one end of the long side of the incoming battery that is close to the first welding module arrives at a position of the first welding module, activating the first welding module, and when the other end of the long side of the incoming battery arrives at the position of the first welding module, turning off the first welding module.

In some embodiments, the control method for the battery welding system further includes: reducing a conveying speed of the first conveying module from an initial first speed to a second speed at least when the first welding module starts welding a first end of the long side of the incoming battery that arrives at the first welding module first, and increasing the conveying speed from the second speed to the first speed when welding of a second end of the long side of the incoming battery that arrives at the first welding module later is completed.

In some embodiments, the control method for the battery welding system further includes: inspecting the quality of a long-side welding seam after the long side of the incoming battery is welded; if the quality of the long-side welding seam does not meet a requirement, rejecting the incoming battery from the first conveying module; and if the quality of the long-side welding seam meets the requirement, continuing to weld a short side of the incoming battery.

In some embodiments, when the quality of the long-side welding seam meets the requirement, the control method for the battery welding system includes: first performing roll processing on the long-side welding seam, and then welding the short side of the incoming battery.

In some embodiments, the battery welding system further includes a second conveying module, a second welding module, and a transfer device. The second welding module is arranged beside the second conveying module, and the second welding module is configured to weld a joint between a short side of a case and a short side of a top cover. The first conveying module and the second conveying module are arranged at an interval, and the transfer device is arranged between the first conveying module and the second conveying module. The control method for the battery welding system includes: after completing welding the long side of the incoming battery, causing the transfer device to transfer the incoming battery to the second conveying module, so as to weld the short side of the incoming battery.

In some embodiments, causing the transfer device to transfer the incoming battery to the second conveying module includes: in the transfer process, reversing an orientation of the incoming battery so that an extension direction of the short side of the incoming battery is parallel to a conveying direction of the second conveying module.

The aforementioned description is only an overview of the technical solution of the present application. In order to better understand the technical means of the present application and thus implement them according to the contents of the specification, and in order to make the aforementioned and other objectives, features, and advantages of the present application more obvious and understandable, detailed description of the present application will be made specifically below.

### DESCRIPTION OF DRAWINGS

In order to more clearly illustrate the technical solutions of the embodiments of the present application, the drawings required in the embodiments of the present application will be described briefly below. Apparently, the drawings described below depict merely some embodiments of the present application. For those of ordinary skill in the art, other drawings may also be obtained according to these drawings without any creative effort.
FIG. 1 is a schematic diagram of station layout of a battery welding system according to some embodiments of the present application;
FIG. 2 is a schematic diagram of a transfer device of a battery welding system according to some embodiments of the present application;
FIG. 3 is a schematic diagram of a first welding module starting welding a long side of an incoming battery according to some embodiments of the present application;
FIG. 4 is a schematic diagram of a first welding module completing welding a long side of an incoming battery according to some embodiments of the present application;
FIG. 5 is a schematic diagram of a second welding module starting welding short sides of two incoming batteries according to some embodiments of the present application;
FIG. 6 is a schematic diagram of a second welding module completing welding short sides of two incoming batteries according to some embodiments of the present application; and
FIG. 7 is a schematic diagram of a control method for a battery welding system according to some embodiments of the present application.

### List of reference numerals:

First welding module 100, first conveying module 200, second welding module 300, second conveying module 400, transfer device 500, unloading module 600, loading module 700, first rolling device 800, second rolling device 900, press-fitting device 1000, first post-weld inspection module 1100, first appearance inspection module 1200, second post-weld inspection module 1300, second appearance inspection module 1400, rejection module 1500;
first laser welding machine 101, second laser welding machine 301, gripping assembly 501, central rotating shaft 502, lifting member 503.

### DETAILED DESCRIPTION

Unless otherwise defined, all technical and scientific terms used herein have the same meaning as commonly understood by those skilled in the art belonging to the technical field of the present application. The terms used herein are intended only for the purpose of describing specific embodiments and are not intended to limit the present application. The terms "including" and "having" and any variations thereof in the specification and the claims of the present application and in the description of drawings above are intended to cover non-exclusive inclusion.

In the descriptions of the embodiments of the present application, the technical terms "first", "second", and the like are used only to distinguish between different objects, and are not to be understood as indicating or implying a relative importance or implicitly specifying the number, particular order, or primary and secondary relation of the technical features indicated. In the description of the embodiments of the present application, the meaning of "a plurality of" is two or more, unless otherwise explicitly and specifically defined.

Reference to "an embodiment" herein means that a particular feature, structure, or characteristic described with reference to an embodiment may be included in at least one embodiment of the present application. The appearance of this phrase in various places in the specification does not necessarily refer to the same embodiment, nor is it a separate or alternative embodiment that is mutually exclusive with other embodiments. It is explicitly and implicitly understood by those skilled in the art that the embodiments described herein may be combined with other embodiments.

In the description of the embodiment of the present application, the term "and/or" is merely an association that describes the associated objects, indicating that there may be three kinds of relationships, such as A and/or B, which may be denoted as: the existence of A alone, the existence of A and B at the same time, and the existence of B alone. Moreover, the character "/" herein generally indicates that the context objects are in an "or" relationship.

In the description of the embodiments of the present application, the term "a plurality of" refers to more than two (including two), and similarly, "a plurality of groups" refers to more than two groups (including two groups); and "a plurality of sheets" refers to more than two sheets (including two sheets).

In the description of the embodiments of the present application, the orientation or positional relationships indicated by the technical terms "center", "longitudinal", "transverse", "length", "width", "thickness", "upper", "lower", "front", "back", "left", "right", "vertical", "horizontal", "top", "bottom", "inner", "outer", "clockwise", "counterclockwise", "axial", "radial", "circumferential", etc. are based on the orientation or positional relationships shown in the accompanying drawings, and are only for convenience of description of the present application and simplification of the description, rather than indicating or implying that the indicated apparatus or element must have a specific orientation, be constructed and operate in a specific orientation, and therefore, may not be understood as a limitation to the present application.

In the description of the embodiments of the present application, unless otherwise expressly specified or limited, the technical terms "mounted", "linked", "connected", "fixed" and other terms shall be understood broadly, for example, they may be fixed, detachable, or integral, or mechanically or electrically connected, or directly linked, or indirectly linked through an intermediate medium, and may be communicated internally or interacted between two elements. For those of ordinary skill in the art, the specific meanings of the above terms in the embodiments of the present application may be understood according to specific situations.

Currently, from the development of market situation, the application of power batteries is becoming increasingly more extensive. Power batteries not only have been applied to energy storage power source systems such as hydraulic, firepower, wind and solar power stations, but also have been widely applied to many fields, e.g., electric transportation vehicles such as electric bicycles, electric motorcycles, and electric automobiles, as well as military equipment and aerospace. With the continuous expansion of the application field of the power batteries, the market demand for the power batteries is also constantly expanding.

Researchers have noted that in the prior art, during the production of a power battery, when a top cover of the power battery is welded, the battery is usually stopped after the battery is conveyed to a welding station, and a welding machine is driven to move relative to the battery to complete the welding, which is relatively inefficient. This results in limited equipment processing capacity and low production efficiency.

Based on the above technical problems, the applicant has discovered through research that if a battery may continue to be conveyed in a welding process, the production cycle may be greatly optimized and production efficiency improved.

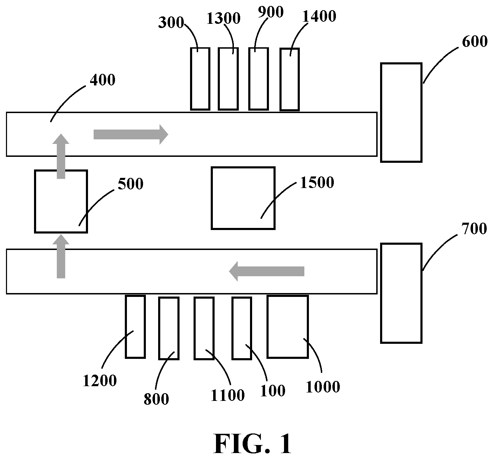

Referring to FIG. 1, the present application provides a battery welding system, including a first conveying module 200 and a first welding module 100. The first conveying module 200 is configured to convey an incoming battery. The incoming battery includes a case and a top cover. An extension direction of a long side of the incoming battery is parallel to a conveying direction of the first conveying module 200. The first welding module 100 is arranged beside the first conveying module 200 and is configured to weld a joint between the long side of the case and a long side of the top cover. In a long side welding process, the incoming battery moves continuously under the conveying of the first conveying module 200, while the first welding module 100 remains fixed.

Specifically, the incoming battery conveyed by the first conveying module 200 is in a state where a battery cell has been placed inside the case and an adapter plate is connected between the battery cell and a terminal post on a top cover by welding. The long side of the case and the long side of the top cover are matched in size. The long side welding process is the process of welding the long side of the case and the long side of the top cover together. In the long side welding process, the first welding module 100 remains fixed, and when one end of the long side of the incoming battery close to the first welding module 100 arrives at a position of the first welding module 100, the first welding module 100 is activated and starts welding. When the other end of the long side of the incoming battery arrives at the position of the first welding module 100, the long side welding is completed, and the first welding module 100 is turned off. In other words, in the entire long side welding process, an action point of the first welding module 100, which is configured to weld the long side, remains fixed, and the welding of the entire long side is completed by moving the incoming battery.

Based on this approach, while ensuring welding quality, the incoming battery may be kept in a continuous conveying state during the welding, thereby increasing a circulation speed, reducing control costs and production costs, simplifying production strategies, and ultimately improving production efficiency. Compared with related technologies where the battery remains stationary during welding and a welding machine is controlled to move relative to the battery for welding, this method eliminates a requirement for space reserved for the movement of the welding machine, so that the entire production environment is more spacious.

In some embodiments, the first conveying module 100 is configured to reduce a conveying speed from an initial first speed to a second speed at least when the first welding module 100 starts welding a first end of the long side of the incoming battery that arrives at the first welding module 100 first, and to increase the conveying speed from the second speed to the first speed when welding of a second end of the long side of the incoming battery that arrives at the first welding module 100 later is completed. Reducing the conveying speed may guarantee the welding quality. In some embodiments, the first conveying module 100 may reduce the conveying speed before the first end of the long side of the incoming battery that arrives at the first welding module 100 first starts welding, and after the second end of the long side of the incoming battery that arrives at the first welding module 100 later completes welding, the conveying speed may be restored after a certain time interval. In other words, unlike the above embodiments, the first conveying module 100 reduces the conveying speed earlier and restores the conveying speed later, which may improve the stability of system operation to a certain extent.

Referring to FIG. 1, in some embodiments, the battery welding system further includes a first rolling device 800, and the first rolling device 800 is arranged beside the first conveying module 200 and downstream of the first welding module 200 in the conveying direction of the first conveying module 200, and is configured to roll a long-side welding seam after welding the long side of the incoming battery. Rolling the long-side welding seam may improve the strength and reliability of the welding seam, thereby ensuring production quality.

Referring to FIG. 1, in some embodiments, the battery welding system further includes a second conveying module 400 and a second welding module 300, the second welding module 300 is arranged beside the second conveying module 400, and the second welding module 300 is configured to weld a joint between a short side of the case and a short side of the top cover. The short side of the case and the short side of the top cover are matched in size, and the process of welding the short side of the case and the short side of the top cover together is referred to as a short side welding process. Welding is performed on both the long sides and the short sides, which improves the integrity of the welding of the incoming battery.

Referring to FIG. 1, in some embodiments, the battery welding system includes a transfer device 500. The first conveying module 200 and the second conveying module 400 are arranged at an interval, the transfer device 500 is arranged between the first conveying module 200 and the second conveying module 400, and is configured to transfer the incoming battery to the second conveying module 400 after the long side of the incoming battery is welded. By using the transfer device 500, the transfer of the incoming battery may be completed conveniently and efficiently.

In some embodiments, the first conveying module 200 and the second conveying module 400 are arranged in parallel at an interval, and the conveying direction of the first conveying module 200 is opposite to a conveying direction of the second conveying module 400. This may effectively save space and improve space utilization.

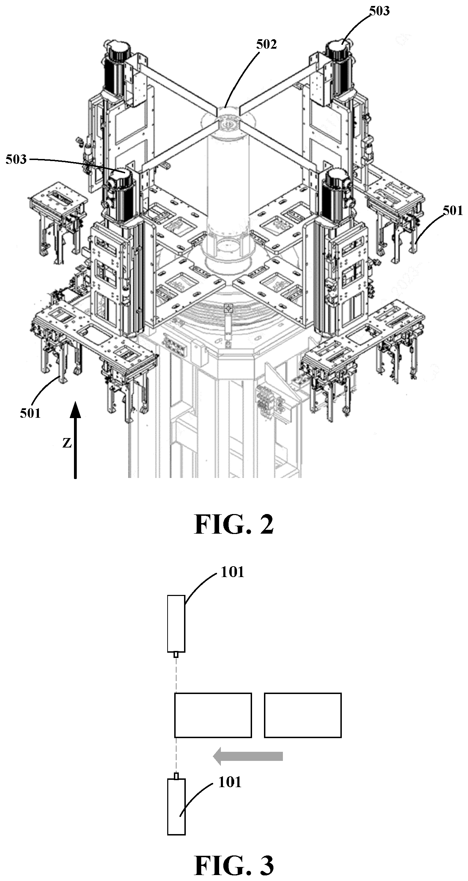

Referring to FIG. 2, in some embodiments, the transfer device 500 includes a gripping assembly 501, and the gripping assembly 501 is configured to grip the incoming battery and reverse the orientation of the incoming battery so that when the incoming battery is placed on the second conveying module 400, an extension direction of the short side of the incoming battery is parallel to the conveying direction of the second conveying module 400. During the transfer of the incoming battery by the transfer device 500, the gripping assembly 501 also adjusts the orientation of the incoming battery, which improves the efficiency, so that when the incoming battery is placed on the second conveying module 400, no adjustment of the angle of the incoming battery is required, and the short side may be welded directly, thus improving the production efficiency.

Referring to FIG. 2, in some embodiments, the gripping assembly 501 is rotatably arranged about its own axis, so as to drive the incoming battery to rotate when gripping the incoming battery. Specifically, the transfer device 500 has a rotary cylinder, and the gripping assembly 501 is arranged on the rotary cylinder. The rotary cylinder drives the gripping assembly 501 to rotate, so as to adjust the orientation of the incoming battery being gripped.

In some embodiments, the gripping assembly 501 is configured to grip two incoming batteries. By grabbing two incoming batteries at once, adjusting orientations of the two incoming batteries at the same time, and placing the two incoming batteries on the second conveying module 400, the transfer efficiency may be improved, thereby increasing the production efficiency.

Referring to FIG. 2, in some embodiments, the transfer device 500 includes a central rotating shaft 502 and a plurality of gripping assemblies 501 connected to the central rotating shaft 502. The plurality of gripping assemblies 501 are arranged centrosymmetrically around the central rotating shaft 502. The central rotating shaft 502 is configured to drive the plurality of gripping assemblies 501 to move circularly about the central rotating shaft 502, so that during one rotation of the central rotating shaft 502, the plurality of gripping assemblies 501 sequentially grip incoming batteries on the first conveying module 200. Specifically, the first conveying module 200 has a transfer and loading station. After the long side of the incoming battery is welded, it arrives at the transfer and loading station to be transferred by the transfer device 500. The second conveying module 400 has a transfer and unloading station. The transfer device 500 places the incoming battery obtained from the transfer and loading station to the transfer and unloading station, thereby completing the transfer action. The transfer and loading station and the transfer and unloading station are arranged at different positions on a movement path of the gripping assembly 501, respectively. In the process of the gripping assembly 501 completing one circular motion, it passes through the transfer and loading station and the transfer and unloading station respectively. That is, controlling the central rotating shaft 502 to rotate continuously in one direction may continuously transfer the incoming batteries on the first conveying module 200 to the second conveying module 400, which simplifies the transfer control strategy.

Referring to FIG. 2, in some embodiments, the transfer device 500 includes four gripping assemblies 501, with two adjacent gripping assemblies 501 spaced apart by 90 degrees in a direction in which the gripping assemblies 501 move circularly. Such arrangement may simplify the transfer device 500, and during the rotation of the central rotating shaft 502, the four gripping assemblies 501 grab incoming batteries in sequence, thus improving the efficiency.

Specifically, the central rotating shaft 502 is configured to, by rotating every half circle (i.e., 180 degrees), move a certain gripping assembly 501 from the transfer and loading station to the transfer and unloading station, in other words, complete one transfer operation of the incoming battery from the transfer and loading station to the transfer and unloading station. Furthermore, for example, the central rotating shaft 502 rotates counterclockwise, and in a counterclockwise direction, the four gripping assemblies 501 are respectively positioned as a first gripping assembly to a fourth gripping assembly. When the first gripping assembly matches the transfer and loading station, it performs a gripping action. When the third gripping assembly matches the transfer and unloading station, it performs a lowering action. After the central rotating shaft 502 rotates by 90 degrees, the fourth gripping assembly matches the transfer and loading station and performs a gripping action, and the second gripping assembly matches the transfer and unloading station and performs a lowering action. After the central rotating shaft 502 continues to rotate by 90 degrees, the first gripping assembly matches with the transfer and unloading station and performs a lowering action, and the third gripping assembly matches with the transfer and loading station and performs a gripping action.

Referring to FIG. 2, in some embodiments, the transfer device 500 further includes a lifting member 503, and the gripping assembly 501 is arranged on the lifting member 503. The lifting member 503 is movably arranged in a height direction Z to drive the gripping assembly 501 to move in the height direction Z, thereby adjusting a distance between the gripping assembly 501 and the second conveying module 400 in the height direction Z. When the gripping assembly 501 performs a gripping action, the lifting member 503 drives the gripping assembly 501 to descend for gripping, and after gripping, it drives the gripping assembly 501 to rise. When the gripping assembly 501 performs a lowering action, the lifting member 503 drives the gripping assembly 501 to descend for lowering, and after lowering, it drives the gripping assembly 501 to rise. The height of the gripping assembly 501 may be easily adjusted using the lifting member 503, thereby reducing control costs.

Referring to FIG. 1, in some embodiments, the battery welding system further includes a second rolling device 900, and the second rolling device 900 is arranged beside the second conveying module 400 and downstream of the second welding module 300 in the conveying direction of the second conveying module 400, and is configured to roll a short-side welding seam of the incoming battery. After the short side welding, rolling the short-side welding seam may improve the strength and reliability of the welding seam, thereby ensuring the production quality.

Referring to FIG. 1, in some embodiments, the battery welding system further includes an unloading module 600, and the unloading module is arranged corresponding to the second conveying module 200, and is configured to unload the incoming battery after the short side of the incoming battery is welded. After the long side and the short side of the incoming battery are welded, it is unloaded through the unloading module 600, so as to facilitate subsequent production processing and improve the smoothness of the entire production process.

Referring to FIG. 1, in some embodiments, the battery welding system further includes a press-fitting device 1000, and the press-fitting device 1000 is arranged beside the first conveying module 200 and upstream of the first welding module 200 in the conveying direction of the first conveying module 200, and is configured to press-fit the incoming battery before welding the long side of the incoming battery. Performing press-fitting before welding the long side may improve the reliability of a finished battery.

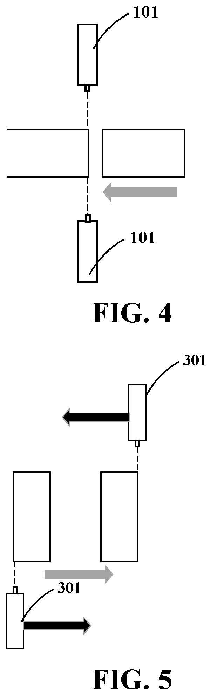

Referring to FIG. 3 and FIG. 4, in some embodiments, the first welding module 100 includes two first laser welding machines 101, the two first laser welding machines 101 are arranged at an interval, and the two first laser welding machines 101 are configured to weld two long sides of the incoming battery, respectively. The two first laser welding machines 101 are located on two sides of the incoming battery, respectively, which allows welding to be performed on both long sides, thus improving welding efficiency. During the long side welding process, when one end of the long side of the incoming battery that is close to the first welding module 100 arrives at a position of the first welding module 100, the two first laser welding machines 101 emit lasers to perform welding. At this time, the incoming battery is still moving in a direction indicated by a gray arrow. When the other end of the long side of the incoming battery arrives at the position of the first welding module 100, the long side welding is completed, and the two first laser welding machines 101 stop emitting lasers. Furthermore, as the first conveying module 200 continues conveying, one end of a second incoming battery, which is adjacent to the incoming battery whose long side welding has been completed, arrives at the position of the first welding module 100. The two first laser welding machines 101 weld long sides of the second incoming battery in accordance with the above process, which will not be described in detail here.

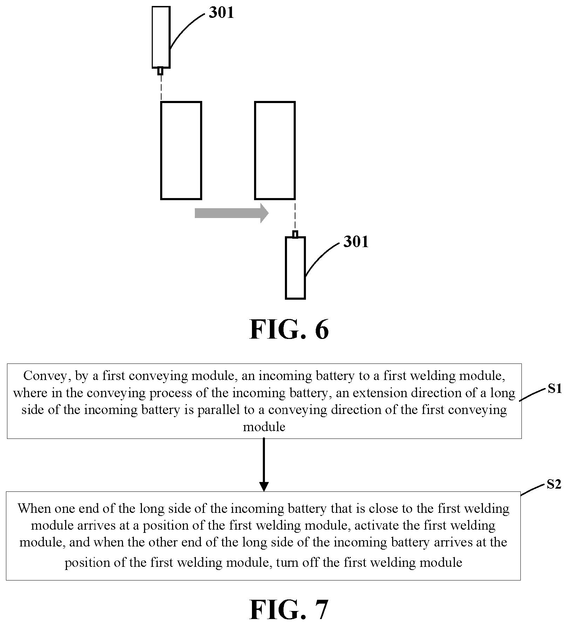

It is understandable that, based on the above embodiments, referring to FIG. 5 and FIG. 6, the second welding module 300 includes two second laser welding machines 301, the two second laser welding machines 301 are arranged at an interval, and the two second laser welding machines 301 are configured to weld two short sides of the incoming battery, respectively. After long side welding is completed, both of two adjacent incoming batteries are transferred to the second conveying module 400, and orientations of the two adjacent incoming batteries are reversed so that extension directions of short sides are parallel to the conveying direction of the second conveying module 400 (refer to the gray arrow). Unlike the long side welding process, the two second laser welding machines 301 in the second welding module 300 are staggered so that when the two incoming batteries arrive at the position of the second welding module 300 as a group, in the conveying direction of the second conveying module 400 (refer to the gray arrow), one of the second laser welding machines 301 is located at a front end of the short side of the front incoming battery, and the other second laser welding machine 301 is located at a rear end of the short side of the rear incoming battery. At this time, the second conveying module 400 stops the conveying action, and the two second laser welding machines 301 move towards each other (refer to black arrows) to weld the two short sides of the two incoming batteries on both sides respectively.

Of course, the two second laser welding machines 301 may also be arranged with reference to the arrangement of the two first laser welding machines 101 in the first welding module 100. That is, when the incoming battery arrives at the second welding module 300, the two second laser welding machines 301 are arranged on both sides of the incoming battery and their positions are aligned.

In some embodiments, the battery welding system further includes a loading module 700, and the loading module 700 is arranged corresponding to the first conveying module 200, and is configured to load batteries to the first conveying module 200. The loading module 700 may improve loading efficiency and increase the production speed.

The present application further provides a control method for the battery welding system, as shown in FIG. 7, the control method includes the following steps S1 to S2.

In step S1, an incoming battery is conveyed to a first welding module 100 through a first conveying module 200. In the conveying process of the incoming battery, an extension direction of a long side of the incoming battery is parallel to a conveying direction of the first conveying module 200.

In step S2, when one end of the long side of the incoming battery that is close to the first welding module 100 arrives at a position of the first welding module 100, the first welding module 100 is activated, and when the other end of the long side of the incoming battery arrives at the position of the first welding module 100, the first welding module 100 is turned off.

During the welding process, the incoming battery is still in a conveying state, thereby improving welding efficiency and production efficiency.

In some embodiments, the control method further includes: reducing a conveying speed of the first conveying module 200 from an initial first speed to a second speed at least when the first welding module 100 starts welding a first end of the long side of the incoming battery that arrives at the first welding module 100 first, and increasing the conveying speed from the second speed to the first speed when welding of a second end of the long side of the incoming battery that arrives at the first welding module 100 later is completed, thereby improving the welding efficiency.

In some embodiments, the control method further includes: inspecting the quality of a long-side welding seam after the long side of the incoming battery is welded; if the quality of the long-side welding seam does not meet a requirement, rejecting the incoming battery from the first conveying module 200; and if the quality of the long-side welding seam meets the requirement, continuing to weld the short side of the incoming battery. Defective products are rejected to ensure the yield rate of final finished batteries.

In some embodiments, when the quality of the long-side welding seam meets the requirement, the control method includes: first performing roll processing on the long-side welding seam, and then welding the short side of the incoming battery. Rolling the long-side welding seam may improve the production quality.

In some embodiments, the control method includes: after completing welding the long side of the incoming battery, causing the transfer device 500 to transfer the incoming battery to the second conveying module 400, so as to weld the short side of the incoming battery.

In some embodiments, causing the transfer device 500 to transfer the incoming battery to the second conveying module 400 includes: in the transfer process, reversing an orientation of the incoming battery so that an extension direction of the short side of the incoming battery is parallel to a conveying direction of the second conveying module 400.

The present application further provides a battery production line, including the above battery welding system. By means of the battery production line, the production efficiency of the welding process may be improved during battery production, thereby increasing the production efficiency of the entire battery.

The following describes in detail, with reference to FIG. 1 to FIG. 6, a battery welding system according to an example embodiment of the present application.

As shown in FIG. 1 to FIG. 6, the battery welding system includes a first welding module 100, a first conveying module 200, a second welding module 300, a second conveying module 400, a transfer device 500, an unloading module 600, a loading module 700, a first rolling device 800, a second rolling device 900, a press-fitting device 1000, a positioning module, a defocus detection module, a first post-weld inspection module 1100, a first appearance inspection module 1200, a second post-weld inspection module 1300, a second appearance inspection module 1400, and a rejection module 1500. The first conveying module 200 is configured to convey an incoming battery, and in the conveying process, an extension direction of a long side of the incoming battery is parallel to a conveying direction. The first welding module 100 includes two first laser welding machines 101, and the two first laser welding machines 101 are arranged at an interval. When the incoming battery arrives at a position of the first welding module 100, the two first laser welding machines 101 are located on both sides of the incoming battery to weld the two long sides. The transfer device 500 includes a central rotating shaft 502, four gripping assemblies 501 connected to the central rotating shaft 502, and a lifting member. The central rotating shaft 502 is rotatably arranged. The four gripping assemblies 501 are connected to the central rotating shaft 502 and are arranged evenly at intervals around the central rotating shaft 502. The gripping assemblies 501 are configured to grip incoming batteries. The central rotating shaft 502 drives the gripping assemblies 501 to perform a circular motion so that the four gripping assemblies 501 sequentially grip the incoming batteries from the first conveying module 200 and transfer them to the second conveying module 400. In the transfer process, the gripping assemblies 501 rotate around their own axis to adjust the orientations of the incoming batteries. The gripping assemblies 501 are mounted on the lifting member 503. When it is necessary for the gripping assemblies 501 to grip the incoming batteries, the lifting member 503 drives the gripping assemblies 501 to descend and approach the incoming batteries. The positioning module is configured to position the incoming battery when the incoming battery is loaded to the first conveying module 200, so that the incoming battery remains stable in the conveying process, thereby reducing the possibility of accidental shaking. The defocus detection module is configured to detect a defocus amount of the first laser welding machine 101 in the first welding module 100 before the first welding module 100 performs welding. The first post-weld inspection module 1100 is configured to inspect the welding seam quality after the long side welding. The first appearance inspection module 1200 is configured to inspect the appearance condition after the long-side welding seam is rolled. The positioning module is further configured to re-position the incoming battery when the incoming battery is transferred to the second conveying module 400 after welding of the long side is completed, so that the incoming battery remains stable in the conveying process, thereby reducing the possibility of accidental shaking. The second post-weld inspection module 1300 is configured to inspect the welding seam quality after the short side welding. The second appearance inspection module 1400 is configured to inspect the appearance condition after the short-side welding seam is rolled. The rejection module 1500 is configured to promptly reject incoming batteries from the first conveying module 200 or the second conveying module 400 if the inspection results of the first post-weld inspection module 1100, the first appearance inspection module 1200, the second post-weld inspection module 1300, and the second appearance inspection module 1400 do not meet requirements, thereby ensuring the yield rate of finished batteries.

The present application has been described with reference to the preferred embodiments; however, various modifications may be made and components thereof may be replaced with equivalents without departing from the scope of the present application. In particular, the technical features mentioned in the various embodiments may be combined in any manner as long as there is no structural conflict. The present application is not limited to the specific embodiments disclosed herein, but rather includes all technical solutions falling within the scope of the claims.

## Claims

1. A battery welding system, comprising:
a first conveying module (200) configured to convey an incoming battery, the incoming battery comprising a case and a top cover, wherein an extension direction of a long side of the incoming battery is parallel to a conveying direction of the first conveying module (200); and
a first welding module (100) arranged beside the first conveying module (200) and configured to weld a joint between a long side of the case and a long side of the top cover, wherein in a long side welding process, the incoming battery is continuously moved under the conveying of the first conveying module (200), while the first welding module (100) remains fixed.

2. The battery welding system according to claim 1, wherein the first conveying module is configured to reduce a conveying speed from an initial first speed to a second speed at least when the first welding module starts welding a first end of the long side of the incoming battery that arrives at the first welding module first, and to increase the conveying speed from the second speed to the first speed when welding of a second end of the long side of the incoming battery that arrives at the first welding module later is completed.

3. The battery welding system according to claim 1 or 2, wherein the battery welding system further comprises a first rolling device (800), and the first rolling device (800) is arranged beside the first conveying module (200) and downstream of the first welding module (200) in the conveying direction of the first conveying module (200), and is configured to roll a long-side welding seam after welding the long side of the incoming battery.

4. The battery welding system according to any one of claims 1 to 3, wherein the battery welding system further comprises a second conveying module (400) and a second welding module (300), the second welding module (300) is arranged beside the second conveying module (400), and the second welding module (300) is configured to weld a joint between a short side of the case and a short side of the top cover.

5. The battery welding system according to claim 4, wherein the battery welding system further comprises a transfer device (500), the first conveying module (200) and the second conveying module (400) are arranged at an interval, and the transfer device (500) is arranged between the first conveying module (200) and the second conveying module (400) and is configured to transfer the incoming battery to the second conveying module (400) after the long side of the incoming battery is welded.

6. The battery welding system according to claim 5, wherein the first conveying module (200) and the second conveying module (400) are arranged in parallel at an interval, and the conveying direction of the first conveying module (200) is opposite to a conveying direction of the second conveying module (400).

7. The battery welding system according to claim 5 or 6, wherein the transfer device (500) comprises a gripping assembly (501), and the gripping assembly (501) is configured to grip the incoming battery and reverse an orientation of the incoming battery so that when the incoming battery is placed on the second conveying module (400), an extension direction of the short side of the incoming battery is parallel to the conveying direction of the second conveying module (400).

8. The battery welding system according to claim 7, wherein the gripping assembly (501) is rotatably arranged about its own axis, so as to drive the incoming battery to rotate when gripping the incoming battery.

9. The battery welding system according to claim 7 or 8, wherein the gripping assembly (501) is configured to grip two incoming batteries.

10. The battery welding system according to any one of claims 7 to 9, wherein the transfer device (500) comprises a central rotating shaft (502) and a plurality of gripping assemblies (501) connected to the central rotating shaft (502), the plurality of gripping assemblies (501) are arranged centrosymmetrically around the central rotating shaft (502), and the central rotating shaft (502) is configured to drive the plurality of gripping assemblies (501) to move circularly about the central rotating shaft (502), so that during one rotation of the central rotating shaft (502), the plurality of gripping assemblies (501) sequentially grip incoming batteries on the first conveying module (200).

11. The battery welding system according to claim 10, wherein the transfer device (500) comprises four gripping assemblies (501), with two adjacent gripping assemblies (501) spaced apart by 90 degrees in a direction in which the gripping assemblies (501) move circularly.

12. The battery welding system according to any one of claims 7 to 11, wherein the transfer device (500) further comprises a lifting member (503), the gripping assembly (501) is arranged on the lifting member (503), and the lifting member (503) is movably arranged in a height direction (Z) to drive the gripping assembly (501) to move in the height direction (Z), thereby adjusting a distance between the gripping assembly (501) and the second conveying module (400) in the height direction (Z).

13. The battery welding system according to any one of claims 4 to 12, wherein the battery welding system further comprises a second rolling device (900), and the second rolling device (900) is arranged beside the second conveying module (400) and downstream of the second welding module (300) in the conveying direction of the second conveying module (400) and is configured to roll a short-side welding seam of the incoming battery.

14. The battery welding system according to any one of claims 4 to 13, wherein the battery welding system further comprises an unloading module (600), and the unloading module (600) is arranged corresponding to the second conveying module (200) and is configured to unload the incoming battery after the short side of the incoming battery is welded.

15. The battery welding system according to any one of claims 1 to 14, wherein the battery welding system further comprises a press-fitting device (1000), and the press-fitting device (1000) is arranged beside the first conveying module (200) and upstream of the first welding module (200) in the conveying direction of the first conveying module (200) and is configured to press-fit the incoming battery before welding the long side of the incoming battery.

16. The battery welding system according to any one of claims 1 to 15, wherein the first welding module (100) comprises two first laser welding machines (101), the two first laser welding machines (101) are arranged at an interval, and the two first laser welding machines (101) are configured to weld two long sides of the incoming battery, respectively.

17. The battery welding system according to any one to any one of claims 1 to 16, wherein the battery welding system further comprises a loading module (700), and the loading module (700) is arranged corresponding to the first conveying module (200) and is configured to load batteries to the first conveying module (200).

18. A control method based on the battery welding system according to any one of claims 1 to 17, wherein the control method comprises the following steps:
conveying, by the first conveying module (200), the incoming battery to the first welding module (100), wherein in the conveying process of the incoming battery, an extension direction of a long side of the incoming battery is parallel to a conveying direction of the first conveying module (200); and
when one end of the long side of the incoming battery that is close to the first welding module (100) arrives at a position of the first welding module (100), activating the first welding module (100), and when the other end of the long side of the incoming battery arrives at the position of the first welding module (100), turning off the first welding module (100).

19. The control method according to claim 18, wherein the control method further comprises: reducing a conveying speed of the first conveying module (200) from an initial first speed to a second speed at least when the first welding module (100) starts welding a first end of the long side of the incoming battery that arrives at the first welding module (100) first, and increasing the conveying speed from the second speed to the first speed when welding of a second end of the long side of the incoming battery that arrives at the first welding module (100) later is completed.

20. The control method according to claim 18 or 19, wherein the control method further comprises: inspecting the quality of a long-side welding seam after the long side of the incoming battery is welded; if the quality of the long-side welding seam does not meet a requirement, rejecting the incoming battery from the first conveying module (200); and if the quality of the long-side welding seam meets the requirement, continuing to weld a short side of the incoming battery.

21. The control method according to claim 20, wherein when the quality of the long-side welding seam meets the requirement, the control method further comprises: first performing roll processing on the long-side welding seam, and then welding the short side of the incoming battery.

22. The control method according to any one of claims 18 to 21, wherein the battery welding system further comprises a second conveying module (400), a second welding module (300), and a transfer device (500), the second welding module (300) is arranged beside the second conveying module (400), and the second welding module (300) is configured to weld a joint between a short side of the case and a short side of the top cover, the first conveying module (200) and the second conveying module (400) are arranged at an interval, and the transfer device (500) is arranged between the first conveying module (200) and the second conveying module (400), and the control method further comprises: after completing welding the long side of the incoming battery, causing the transfer device (500) to transfer the incoming battery to the second conveying module (400), so as to weld the short side of the incoming battery.

23. The control method according to claim 22, wherein causing the transfer device (500) to transfer the incoming battery to the second conveying module (400) comprises: in the transfer process, reversing an orientation of the incoming battery so that an extension direction of the short side of the incoming battery is parallel to a conveying direction of the second conveying module (400).
